# EUROPÄISCHE PATENTSCHRIFT

(11) **EP 4 301 528 B1**
(45) Veröffentlichungstag und Bekanntmachung des Hinweises auf die Patenterteilung: **01.07.2026**
(21) Anmeldenummer: 22706870.7
(22) Anmeldetag: 25.02.2022
(51) Int. Cl.: B09B 3/60

(54) **VORRICHTUNG ZUR FERMENTATION VON BIOLOGISCH ABBAUBAREN ABFALLSTOFFEN**
DEVICE FOR THE FERMENTATION OF BIODEGRADABLE WASTE
DISPOSITIF OUR LA FERMENTATION DE DÉCHETS BIODÉGRADABLES

(30) Priorität: 02.03.2021 AT 501442021
(43) Veröffentlichungstag der Anmeldung: 10.01.2024
(73) Patentinhaber: Wüster, Heinrich, 6460 Imst/Tirol (AT)
(72) Erfinder: Wüster, Heinrich, 6460 Imst/Tirol (AT)
(74) Vertreter: Puchberger & Partner Patentanwälte
(86) Internationale Anmeldenummer: PCT/EP2022/054778
(87) Internationale Veröffentlichungsnummer: WO 2022/184571

(56) Entgegenhaltungen:
- CN-U- 209 322 691
- JP-A- 2001 029 917

## Beschreibung

Die vorliegende Erfindung betrifft eine Vorrichtung zur Fermentation von biologisch abbaubaren Abfallstoffen, die einen Außenbehälter mit einem Deckel sowie einen innerhalb des Außenbehälters angeordneten und aus dem Außenbehälter entnehmbaren Innenbehälter umfasst. Unter dem Innenbehälter ein ist Flüssigkeitsauffangraum vorgesehen, in den Flüssigkeit durch eine Freistellung im Innenbehälter ablaufen kann.

Derartige Vorrichtungen sind im Stand der Technik bekannt, werden beispielsweise als "urban composter" oder "Bokashi-Komposter" bezeichnet und dienen der Verarbeitung bzw. Entsorgung von biologisch abbaubaren Abfallstoffen, insbesondere von Biomüll, meist im Privathaushalt. Die Abfallstoffe werden üblicherweise in leicht zerkleinerter Form in den Innenbehälter eingebracht, wobei die Freistellung im Innenbehälter klein genug ist, um die eingebrachten Stoffe nicht durchzulassen. Die eingebrachten Feststoffe verbleiben so im Innenbehälter. Die Vorrichtung wird nun verschlossen und unter den im Wesentlichen sauerstofffreien Bedingungen stellen sich anaerobe Fermentationsbedingungen ein, wobei die Fermentation des abbaubaren Materials unter anderem durch Michsäurebakterien erfolgt.

Die Fermentation führt zu einer Zersetzung der eingebrachten Abfallstoffe, wobei die enthaltene Flüssigkeit, die bis zu 70% Gew.-% der Gesamtmasse der Abfallstoffe ausmacht, in den Flüssigkeitsauffangraum abfließen kann. Um weitere Flüssigkeit zu entfernen, kann diese auch manuell aus dem fermentierten Material gepresst werden.

Während die Flüssigkeit beispielsweise als Blumendünger verwendet oder einfach im Abfluss entsorgt werden kann, werden die Feststoffe komprimiert und eine Entnahme der verbleibenden Feststoffe ist nur vergleichsweise selten erforderlich. Dies ist insbesondere in städtischen Wohnbauten, wo die Entsorgung von Abfall aufgrund der langen Wege einen beträchtlichen Zeitaufwand darstellt, von Vorteil.

Vorrichtungen der bekannten Art bieten insbesondere eine umweltfreundliche und einfache Möglichkeit zur Entsorgung von biologisch abbaubaren Abfallstoffen bei gleichzeitiger Reduktion des Aufwands des Abtransports der Feststoffe. Im Stand der Technik sind derartige Vorrichtungen beispielsweise aus der CN 209322691 U oder der JP 2001029917 A bekannt.

Jedoch weisen diese Vorrichtungen auch einige Nachteile auf, insbesondere stellen die Entwicklung von unangenehmen Gerüchen und das Erfordernis der manuellen Komprimierung der Feststoffe zum "Auspressen" der Flüssigkeit Probleme dar.

Es ist nun eine Aufgabe der vorliegenden Erfindung diese Probleme von im Stand der Technik bekannten Vorrichtungen zu überwinden und eine Vorrichtung bereitzustellen, die einfach, sauber und hygienisch zu handhaben ist und dennoch eine hinreichende Fermentationsleistung bereitstellt.

Diese und weitere Aufgaben werden durch eine erfindungsgemäße Vorrichtung gelöst.

Die Erfindung betrifft somit eine Vorrichtung zur Fermentation von biologisch abbaubaren Abfallstoffen, umfassend einen Außenbehälter, einen innerhalb des Außenbehälters angeordneten und aus dem Außenbehälter entnehmbaren Innenbehälter, sowie einen Deckel. Im Außenbehälter ist im Bereich unter dem Innenbehälter ein Flüssigkeitsauffangraum vorgesehen. Dies bedeutet insbesondere, dass Flüssigkeit aus dem Innenbehälter in den Flüssigkeitsauffangraum ablaufen kann. Der Innenbehälter weist ferner wenigstens eine Ablauföffnung zum Ablauf von Flüssigkeit in den Flüssigkeitsauffangraum auf und der Außenbehälter umfasst eine, bevorzugt verschließbare Auslassvorrichtung zum Auslassen von im Flüssigkeitsauffangraum befindlicher Flüssigkeit.

Der Außenbehälter und der Innenbehälter sind insbesondere nach oben offene Behälter, sie weisen somit zumindest eine Wand, einen Boden und gegebenenfalls auch eine dem Boden gegenüberliegend angeordnete Öffnung auf.

Eine Vorrichtung zur Fermentation im Sinne der vorliegenden Erfindung ist bevorzugt zur Umgebungsatmosphäre zumindest teilweise im Wesentlichen gasdicht ausgebildet. Insbesondere ist jener Bereich, in dem die Fermentation des eingebrachten Materials stattfindet, im Wesentlichen gasdicht ausgebildet und kann so im Wesentlichen sauerstofffrei betrieben werden.

Erfindungsgemäß ist vorgesehen, dass die Vorrichtung eine Kompressionsvorrichtung umfasst, die dazu eingerichtet ist, im Innenbehälter befindliches Material zu komprimieren. Dadurch kann durch die Kompression überschüssige Flüssigkeit aus dem Material ausgepresst werden, wodurch die Füllkapazität der Vorrichtung erhöht wird.

Gegebenenfalls ist vorgesehen, dass die Kompressionsvorrichtung einen Kolben und einen im Innenbehälter angeordeten oder anordenbaren Kompressionsstempel umfasst. Der Kolben ist insbesondere mit dem Kompressionsstempel verbunden. Gegebenenfalls ist der Kompressionsstempel formschlüssig an der Wand des Innenbehälters angeordnet.

Gegebenenfalls ist vorgesehen, dass an der dem Kompressionsstempel gegenüberliegenden Seite des Kolbens ein Handgriff angeordnet ist.

Gegebenenfalls ist vorgesehen, dass der Kolben durch eine Durchführöffnung des Deckels geführt und verschiebbar gelagert ist. Dadurch wird erreicht, dass die Kompressionsvorrichtung auch bei geschlossenem Deckel betätigt werden kann. Insbesondere kann hierdurch die Geruchsbelastung minimiert werden, da für den Komprimiervorgang kein Öffnen des Deckels erforderlich ist.

Um den Eintrag von Sauerstoff und das Entweichen von unangenehmen Gerüchen zu vermeiden, ist gegebenenfalls vorgesehen, dass an der Durchführöffnung ein erstes Dichtmittel, insbesondere ein Dichtungsring, zur Dichtung des Kolbens an der Durchführöffnung angeordnet ist.

Gegebenenfalls ist alternativ vorgesehen, dass die Kompressionsvorrichtung vollständig innerhalb der Vorrichtung, insbesondere vollständig innerhalb des Außenbehälters, angeordnet ist.

Gegebenenfalls kann der Kolben eine hand- und/oder motorbetätigte Einrichtung zur Kompression, beispielsweise eine Gewindespindel umfassen. Der Kompressionsstempel kann ein korrespondierendes Gewindeelement aufweisen, sodass der Stempel durch drehen der Gewindespindel auf und ab bewegt werden kann. Insbesondere kann der Kompressionsstempel dann im Innenbehälter nicht frei drehbar sein.

Erfindungsgemäß ist ferner vorgesehen, dass der Außenbehälter einen Auflagebereich aufweist, und dass der Innenbehälter einen Auflagevorsprung aufweist, wobei der Auflagevorsprung zur vorzugsweise umlaufenden Auflage auf dem Auflagebereich ausgebildet ist. Gegebenenfalls umlaufen der Auflagebereich und der Auflagevorsprung den Außenbehälter bzw. den Innenbehälter vollständig.

Dadurch kann einerseits eine sichere Anordnung zwischen Außen- und Innenbehälter ermöglicht werden. Andererseits ist so die Abtrennung zwischen zwei Gasräumen im Inneren der Vorrichtung möglich, was sich vorteilhaft auf die Fermentationseigenschaften auswirkt. Diese Abtrennung wird vorteilhafterweise in Kombination mit einem gegen die Wand des Innenbehälters gedichteten Kompressionsstempel erreicht.

Gegebenenfalls ist in der Kompressionsvorrichtung, insbesondere im Kompressionsstempel, eine Gasdruckausgleichsöffnung vorgesehen. Dieses Merkmal ist insbesondere dann vorteilhaft, wenn die zwei Gasräume abgesehen von der Gasdruckausgleichsöffnung im Wesentlichen gasdicht voneinander getrennt sind. Dann kann die Gasdruckausgleichsöffnung einen Gasaustausch zwischen erstem Gasraum und zweitem Gasraum ermöglichen. Durch die Gasdruckausgleichsöffnung wird der unterwünschten Kompression des unter dem Kompressionsstempel befindlichen Gases vorgebeugt. Zusätzlich bietet die Gasdruckausgleichsöffnung den Vorteil, dass eventuell hindurchgedrückte Flüssigkeit wieder abfließen kann. Die Gasdruckausgleichsöffnung kann beispielsweise eine Bohrung, ein Loch oder dergleichen sein.

Die Gasdruckausgleichsöffnung kann von einer gasdurchlässigen Abdeckung bedeckt sein. Im Rahmen der vorliegenden Erfindung wurde überraschend festgestellt, dass es bei längerdauernder Fermentierung von Abfallstoffen zur Bildung von Fliegenlarven oder dergleichen kommen kann. Die gasdurchlässige Abdeckung kann den Austritt dieser Fliegenlarven verhindern. Die gasdurchlässige Abdeckung kann beispielsweise als Netz und/oder als Gewebe ausgebildet sein. Die gasdurchlässige Abdeckung weist bevorzugt eine Maschenweite von <0,5 mm auf.

Gegebenenfalls ist vorgesehen, dass der Deckel im geschlossenen Zustand der Vorrichtung am Auflagevorsprung anliegt.

Gegebenenfalls ist auch vorgesehen, dass der Deckel im geschlossenen Zustand formschlüssig mit dem Außenbehälter verbunden ist. Gegebenenfalls ist vorgesehen, dass der Deckel im geschlossenen Zustand in einen Rastbereich des Außenbehälters eingerastet ist.

Gegebenenfalls ist vorgesehen, dass am Auflagevorsprung ein gegebenenfalls gummielastisches Dichtelement angeordnet ist. Das Dichtelement umschließt den Auflagevorsprung bevorzugt U-förmig. Dadurch wird eine gute Abdichtung der Gasräume zueinander sowie der Vorrichtung nach außen ermöglicht.

Gegebenenfalls ist vorgesehen, dass der Außenbehälter und/oder der Deckel eine Gasdurchströmöffnung aufweist, wobei die Gasdurchströmöffnung mit einer Filtereinrichtung abgedeckt ist. Gegebenenfalls ist die Filtereinrichtung ein Aktivkohlefilter oder sie umfasst einen Aktivkohlefilter. Dadurch kann insbesondere das Entweichen von unangenehmen Gerüchen verhindert werden. Wenn die Gasdurchströmöffnung nur den Eintritt von Luft in den ersten Gasraum ermöglicht, wurden besonders bevorzugte Eigenschaften in Hinblick auf Geruchsbelastung und Fermentationswirkung festgestellt.

Gegebenenfalls ist alternativ vorgesehen, dass die Vorrichtung im Wesentlichen gasdicht gegen die Umgebungsatmosphäre abgedichtet ist. Auch so können anaerobe Fermentationsbedingungen hergestellt werden.

Gegebenenfalls ist vorgesehen, dass der Kompressionsstempel ein zweites Dichtmittel zur Abdichtung des Kompressionsstempels gegen die Wand des Innenbehälters umfasst. Dabei ist die Wand bevorzugt im Wesentlichen gasundurchlässig ausgebildet. Dadurch kann eine gute Kompression des Abfallmaterials erreicht werden. Ferner wird die Abdichtung zwischen erstem und zweitem Gasraum verbessert.

Das zweite Dichtmittel kann in eine den äußeren Umfang des Kompressionsstempels umlaufende Nut eingelegt sein. Dadurch wird eine besonders einfache Fertigung des Kompressionsstempels ermöglicht.

Gegebenenfalls kann vorgesehen sein, dass die Vorrichtung in ihrem Inneren einen ersten Gasraum und einen zweiten Gasraum umfasst, wobei der erste Gasraum durch den Innenbehälter und die Kompressionsvorrichtung, insbesondere den Kompressionsstempel, im Wesentlichen gasdicht vom zweiten Gasraum getrennt ist. Es wurde herausgefunden, dass sich dadurch besonders gute Fermentationseigenschaften in Kombination mit einer geringen Geruchsentwicklung erzielen lassen.

Der erste Gasraum wird insbesondere durch den Deckel, die Wand des Innenbehälters und den Kompressionsstempel begrenzt. Der zweite Gasraum wird im Wesentlichen durch das verbleibende Innenvolumen der Vorrichtung gebildet. Es kommt zu keinem wesentlichen Gasaustausch zwischen erstem und zweitem Gasraum.

Gegebenenfalls ist der erste Gasraum in gasleitender Weise, insbesondere durch die Gasdurchströmöffnung mit der Filtereinrichtung, bevorzugt einem Aktivkohlefilter, mit der Umgebungsluft verbunden. Dadurch kann auch Sauerstoff in den ersten Gasraum dringen. Es wurde jedoch überraschend festgestellt, dass dennoch gute Fermentationsbedingungen möglich sind, da eine Trennung zwischen den beiden Gasräumen besteht.

Durch die Abdichtung zwischen erstem und zweitem Gasraum, die insbesondere durch das Zusammenwirken von Auflagevorsprung und Auflagebereich sowie durch das zweite Dichtmittel zwischen Kompressionsstempel und Innenbehälter hergestellt wird, kann das Eindringen von Sauerstoff in den zweiten Gasraum im Wesentlichen vollständig verhindert werden. In der bestimmungsgemäßen Verwendung der Vorrichtung ist biologisch abbaubares Material, insbesondere abbaubare Feststoffe im Innenbehälter und Fermentationseluat im Flüssigkeitsauffangraum, nur im zweiten Gasraum angeordnet, somit unter anaeroben Bedingungen. Dies verhindert aerobe Prozesse und kann insbesondere das Wachstum von Organismen hintanhalten die Sauerstoff benötigen, wie beispielsweise Larven von Fliegen oder Mikroorganismen, die aerobe Wachstumsbedingungen benötigen.

Gegebenenfalls ist vorgesehen, dass der Innenbehälter wenigstens einen Haltegriff, insbesondere zwei einander gegenüberliegend angeordnete Haltegriffe, umfasst. Dadurch ist eine einfache und saubere Entnahme des Innenbehälters mitsamt dem enthaltenen Material möglich.

Gegebenenfalls ist vorgesehen, dass die Ablauföffnung im Boden des Innenbehälters angeordnet ist.

Gegebenenfalls ist vorgesehen, dass der Boden des Innenbehälters eine Auswölbung aufweist, wobei die Auswölbung in Richtung des Flüssigkeitsauffangraums weist. Gegebenenfalls ist vorgesehen, dass der Kompressionsstempel eine Auswölbung aufweist, wobei die Auswölbung vom Flüssigkeitsauffangraum wegweist. Gegebenenfalls sind beide vorgenannten Merkmale vorgesehen. Durch die Auswölbung an zumindest einem der genannten Elemente wird eine verbesserte Kompression des Materials und gleichzeitig ein verbesserter Ablauf der Flüssigkeit erreicht.

Gegebenenfalls ist vorgesehen, dass die Ablauföffnung als Anordnung einer Vielzahl von Ablauflöchern, insbesondere als Lochgitter, ausgeführt ist.

Der Innenbehälter umfasst gegebenenfalls eine Wand und einen Boden und weist insbesondere eine im Wesentlichen zylindrische oder prismatische Form auf. In diesem Zusammenhang bedeutet "im Wesentlichen", dass auch gewisse Abweichungen von einer zylindrischen oder prismatischen Form möglich sind. Beispielsweise kann der Innenbehälter auch eine konische Form aufweisen, wenn sich der Durchmesser im Bereich des Bodens nicht um mehr als etwa 10 mm, bevorzugt nicht mehr als etwa 5 mm, vom Durchmesser im Bereich der oberen Öffnung des Innenbehälters unterscheidet.

Gegebenenfalls ist vorgesehen, dass die Vorrichtung ferner eine Eintragsvorrichtung umfasst, wobei die Eintragsvorrichtung ein Durchflussrohr mit einem ersten Anschlussbereich und einem zweiten Anschlussbereich zur Verbindung mit einem Abwasserrohr umfasst, wobei im Durchflussrohr ein Siebelement zur Entfernung von Feststoffen aus der das Durchflussrohr durchströmenden Flüssigkeit vorgesehen ist, wobei die Eintragsvorrichtung im Bereich des Siebelements ein Eintragsrohr umfasst, und wobei das Eintragsrohr durch eine Eintragsöffnung in die Vorrichtung, insbesondere in den Innenbehälter, geführt ist.

Dadurch können Feststoffe aus dem Abwasser, das durch die Eintragsvorrichtung strömt, einer Fermentation zugeführt werden, ohne große Mengen an Wasser in die Vorrichtung einzubringen. Bevorzugt ist gemeinsam mit diesem Merkmal eine motorgesteuerte Kompressionsvorrichtung, gegebenenfalls in Verbindung mit einer Steuervorrichtung, vorgesehen.

Gegebenenfalls ist vorgesehen, dass das Siebelement relativ zum Durchflussrohr einen Neigungswinkel aufweist, der mehr als 20°, vorzugsweise mehr als 40°, im Vergleich zur Horizontalen beträgt. Dadurch wird ein gutes Abrutschen der Feststoffe in das Eintragsrohr ermöglicht. Gegebenenfalls weist auch das Eintragsrohr einen Neigungswinkel auf, der mehr als 20°, vorzugsweise mehr als 40°, im Vergleich zur Horizontalen beträgt.

Gegebenenfalls ist das Siebelement eine Siebrutsche. Gegebenenfalls weist das Siebelement eine Maschenweite zwischen 5 mm und 20 mm auf.

Weitere Merkmale der Erfindung ergeben sich aus den Patentansprüchen, den Figuren sowie der Beschreibung des Ausführungsbeispiels.

Nachfolgend wird die Erfindung anhand von exemplarischen Ausführungsbeispielen im Detail erläutert. Die Ausführungsbeispiele dienen lediglich der Veranschaulichung der Erfindung und sollen den Schutzbereich der Patentansprüche nicht einschränken.

Es zeigen:
Fig. 1 eine schematische seitliche Schnittansicht einer erfindungsgemäßen Vorrichtung gemäß einem ersten Ausführungsbeispiel mit der Kompressionsvorrichtung in einer ersten Position;
Fig. 2 eine schematische seitliche Schnittansicht der erfindungsgemäßen Vorrichtung gemäß dem ersten Ausführungsbeispiel mit der Kompressionsvorrichtung in einer zweiten Position;
Fig. 3 eine vergrößerte bereichsweise Ansicht von Fig. 1; und
Fig. 4 eine schematische seitliche Schnittansicht einer erfindungsgemäßen Vorrichtung gemäß einem zweiten Ausführungsbeispiel.

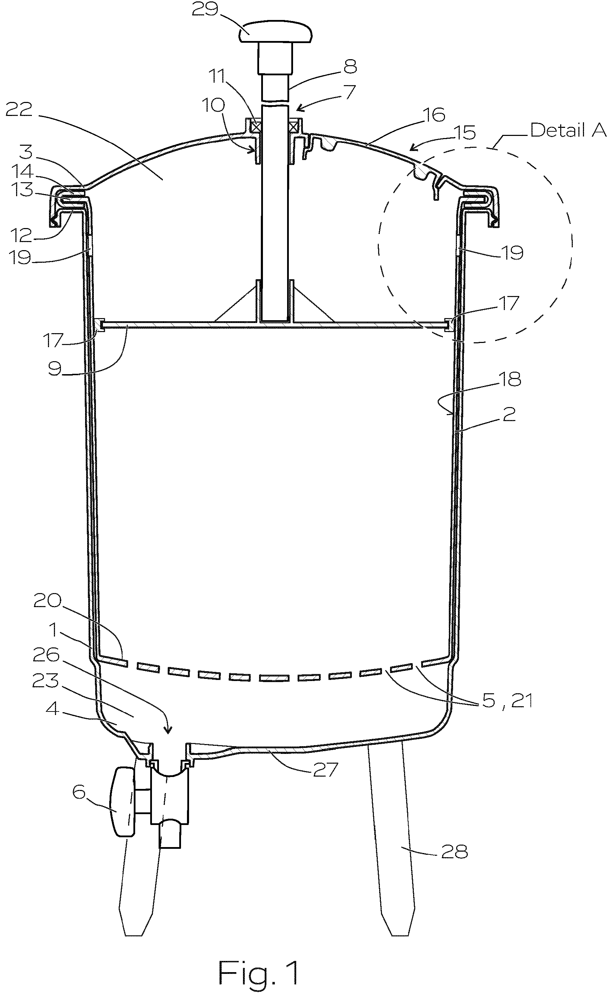

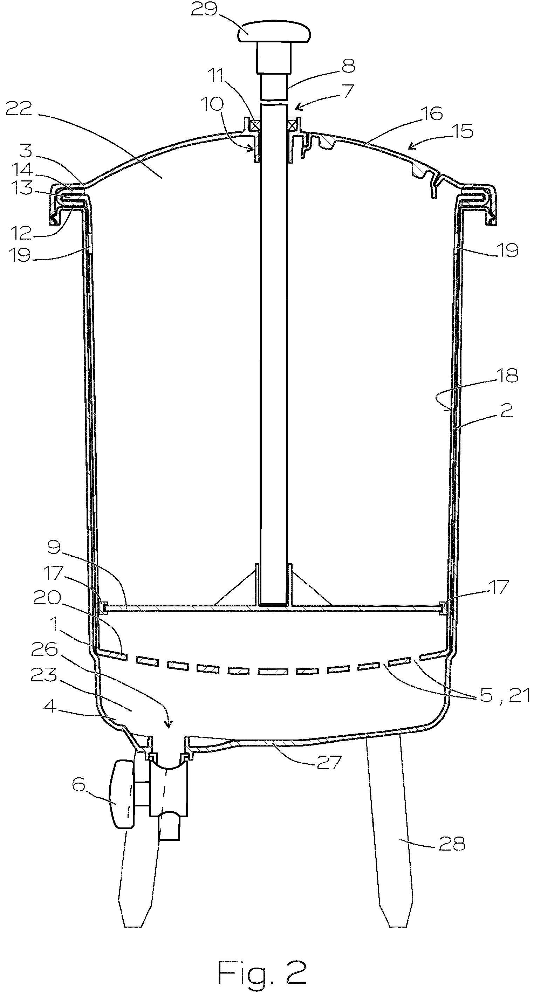

Fig. 1 zeigt eine schematische seitliche Schnittansicht einer erfindungsgemäßen Vorrichtung gemäß einem ersten Ausführungsbeispiel mit der Kompressionsvorrichtung 7 in einer ersten Position und Fig. 2 zeigt dieselbe Vorrichtung mit der Kompressionsvorrichtung 7 in einer zweiten Position. Zur Vereinfachung werden die beiden Figuren gemeinsamen beschrieben.

Die Vorrichtung umfasst einen Außenbehälter 1 und einen innerhalb des Außenbehälters 1 angeordneten Innenbehälter 2. Die beiden Behälter 1,2 weisen jeweils eine im Wesentlichen zylindrische Wand, einen Boden sowie eine dem Boden gegenüberliegende Öffnung auf.

Die Vorrichtung ist mit einem Deckel 3 verschlossen, der formschlüssig mit dem Außenbehälter 1 verbunden ist. Die formschlüssige Verbindung erfolgt in diesem Ausführungsbeispiel über einen Rastvorsprung 24 am Außenbehälter 1 sowie eine korrespondierende Rastfreistellung 25 am Deckel 3.

Der Innenbehälter 2 weist an seinem oberen Ende einen umlaufenden Auflagevorsprung 13 auf mit dem er über das Dichtelement 14 auf einem korrespondierenden Auflagebereich 12 des Außenbehälters 1 anliegt. Dadurch wird die relative Position der beiden Behälter 1,2 zueinander festgelegt. Das am Auflagevorsprung 13 angeordnete umlaufende und U-förmige Dichtelement 14 steht ferner mit dem Deckel 3 in Kontakt, wenn sich die Vorrichtung in geschlossenem Zustand befindet.

Da die Höhe des Innenbehälters 2 geringer ist als die Höhe des Außenbehälters 1, ist im Bereich unterhalb des Innenbehälters 2 ein Freiraum gebildet, der einen Flüssigkeitsauffangraum 4 darstellt. Durch die im Boden 20 des Innenbehälters 2 vorgesehene Ablauföffnung 5, die in diesem Ausführungsbeispiel in Form einer Vielzahl von Ablauflöchern 21 ausgebildet ist, kann Flüssigkeit vom Innenbehälter in den Flüssigkeitsauffangraum 4 laufen.

Im Boden 27 des Außenbehälters 1 ist eine Auslassöffnung 26 vorgesehen, an die eine Auslassvorrichtung 6 in Form eines Auslasshahns angeschlossen ist. Dadurch kann Flüssigkeit, die sich im Flüssigkeitsauffangraum 4 befindet, bei Bedarf abgelassen werden.

Die Vorrichtung umfasst ferner Standfüße 28, um einen Auffangbehälter unter der Auslassvorrichtung 6 platzieren zu können und so ein einfacheres Auslassen der Flüssigkeit zu erlauben.

Die Vorrichtung umfasst ferner eine Kompressionsvorrichtung 7, die zum Komprimieren von im Innenbehälter 2 befindlichem Abfallmaterial ausgebildet ist. Die Kompressionsvorrichtung 7 umfasst in diesem Ausführungsbeispiel einen Kolben 8 sowie einen mit dem Kolben 8 verbundenen Kompressionsstempel 9. Der Kompressionsstempel 9 liegt über ein zweites Dichtmittel 17 im Wesentlichen formschlüssig an der Wand 18 des Innenbehälters 2 an. In einer nicht dargestellten Ausführungsform kann das zweite Dichtmittel 17 in einer den äußeren Umfang des Kompressionsstempels 9 umlaufenden Nut angeordnet sein.

Der Kolben 8 ragt durch eine Durchführöffnung 10 im Deckel 3 und ist mit einem ersten Dichtmittel 11 gegen die Durchführöffnung 10 abgedichtet. Das erste Dichtmittel 11 kann beispielsweise ein Dichtring sein. Dadurch wird der Eintrag von Luft in die Vorrichtung sowie das Entweichen von Gasen aus der Vorrichtung im Bereich der Durchführöffnung 10 vermieden oder zumindest reduziert.

Der Kolben 8 ist in der Durchführöffnung 10 verschiebbar geführt, wodurch der Kompressionsstempel 9 in unterschiedliche Positionen gebracht werden kann. Eine erste Position, in der sich der Kompressionsstempel 9 im oberen Bereich des Innenbehälters 2 befindet, ist in Fig. 1 dargestellt. Eine zweite Position, in der sich der Kompressionsstempel 9 im unteren Bereich des Innenbehälters 2 befindet, ist in Fig. 2 dargestellt. Durch die Verwendung einer Durchführöffnung 10 im Deckel ist die Kompressionsvorrichtung 7 von außen betätigbar, das heißt ohne den Deckel 3 abnehmen zu müssen.

Um die Verlagerung der Kompressionsvorrichtung 7 zu erleichtern, ist an jenem Ende des Kolbens 8, der dem Kompressionsstempel 9 gegenüberliegt, ein Handgriff 29 angeordnet.

Im Deckel 3 ist ferner eine Gasdurchströmöffnung 15 vorgesehen, die von einer Filtereinrichtung 16 verschlossen wird. In diesem Beispiel ist die Filtereinrichtung 16 als Aktivkohlefilter ausgebildet, es können jedoch auch andere Filtereinrichtungen 16 vorgesehen sein, insbesondere solche die nützlich sind, um unangenehme Gerüche zu filtern. Jedenfalls erlaubt die Filtereinrichtung den Durchtritt von Luft.

Durch das Dichtelement 14 am Auflagevorsprung 13 des Innenbehälters 2 und das zweite Dichtmittel 17 am Kompressionsstempel 9 wird der Innenraum der Vorrichtung in zwei Gasräume 22,23 unterteilt, zwischen denen kein wesentlicher Luftaustausch stattfinden kann.

Der erste Gasraum 22 wird im Wesentlichen durch den Deckel 3, den oberen Bereich des Innenbehälters 2 und den Kompressionsstempel 9 begrenzt. Der erste Gasraum 22 steht über die Gasdurchströmöffnung 15 in Gasaustausch mit der Umgebungsluft und ist somit im Betriebszustand der Vorrichtung nicht sauerstofffrei.

Der zweite Gasraum 23 wird im Wesentlichen durch den Kompressionsstempel 9 und den Außenbehälter 1 begrenzt und er entspricht dem verbleibenden Innenraum der Vorrichtung. Durch das Vorhandensein von Dichtelement 14 und zweitem Dichtmittel 17 findet kein wesentlicher Luftaustausch zwischen zweitem Gasraum 23 und der Umgebungsluft statt. Dadurch können sich im zweiten Gasraum 23, der sich auch in den unter dem Kompressionsstempel 9 liegenden Teil des Innenbehälters 2 erstreckt, im Wesentlichen sauerstofffreie Bedingungen einstellen, wenn sich die Vorrichtung im Betrieb befindet.

Um die Entnahme des Innenbehälters 2 zu erleichtern, weist dieser zwei voneinander gegenüberliegend angeordnete Haltegriffe 19 an seiner Wand 18 auf, die den Innenbehälter 2 jedoch nicht vollständig durchsetzen. Der Boden 20 des Innenbehälters 2 weist eine Auswölbung auf, die in Richtung des Flüssigkeitsauffangraums 4 weist. Dadurch wird ein besserer Ablauf von Flüssigkeit ermöglicht. Der Kompressionsstempel 9 ist in diesem Ausführungsbeispiel plan ausgeführt, er kann jedoch ebenfalls eine Auswölbung aufweisen, die bevorzugt vom Flüssigkeitsauffangraum 4 wegweist.

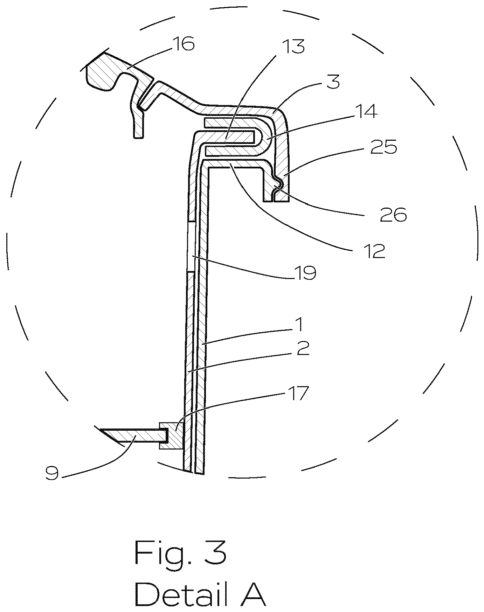

Fig. 3 zeigt eine vergrößerte bereichsweise Ansicht von Fig. 1. Hier ist der Auflagebereich 12, der Auflagevorsprung 13 sowie die formschlüssige Verbindung zwischen Deckel 3 und Außenbehälter 1 über Rastvorsprung 24 und Rastfreistellung 25 im Detail gezeigt. Ferner ist erkennbar, dass das Dichtelement 14 den Auflagevorsprung U-förmig umgibt und dadurch mit seiner Unterseite am Auflagebereich 12 aufliegt und mit seiner Oberseite mit dem Deckel 3 in Kontakt steht.

Beispielhaft ist nachfolgend die Funktion der Vorrichtung gemäß dem ersten Ausführungsbeispiel beschrieben:
Durch Abnehmen des Deckels 3 kann biologisch abbaubares Material, beispielsweise Küchenabfälle, in die Vorrichtung eingebracht werden. Das Lochgitter mit seinen Ablauflöchern 21 am Boden 20 des Innenbehälters 2 hält das eingebrachte Material zurück. Die Vorrichtung wird nach erfolgter Einbringung des Materials verschlossen und der Kompressionsstempel 9 wird soweit wie möglich abgesenkt.

Durch die Trennung zwischen den beiden Gasräumen 22,23 wird dem zweiten Gasraum 23, in dem sich auch das eingebrachte Material befindet, kein frischer Sauerstoff mehr zugeführt. Dies bedeutet, dass sich allmählich anaerobe Bedingungen einstellen und beispielsweise Milchsäurebakterien (Ordnung der *Lactobacillales*) das abbaubare Material fermentieren können. Diese Fermentation führt zur Freisetzung von Wasser aus dem Material, das durch das Lochgitter in den Flüssigkeitsauffangraum 4 abläuft und sich dort sammelt. Die Kompressionsvorrichtung 7 kann zusätzlich zum Auspressen von Flüssigkeit eingesetzt werden.

Die Flüssigkeit kann über die Auslassvorrichtung 6 aus der Vorrichtung ausgelassen werden. Neben einer einfachen Entsorgung in den Abfluss kann diese Flüssigkeit beispielsweise auch einer weiteren Verwendung, etwa als Blumendünger zugeführt werden.

Durch die anaeroben Verhältnisse im zweiten Gasraum 23 werden aerobe Prozesse verhindert und unerwünschtes Wachstum von Schädlingen oder dergleichen wird verhindert. Wenn dennoch Gase von zweiten Gasraum 23 in den ersten Gasraum 22 dringen, werden diese vor ihrem Entweichen in die Umgebungsluft durch die Filtereinrichtung 16 gefiltert, wodurch die Freisetzung schlechter Gerüche verhindert wird. Daher ist die Vorrichtung auch in Innenräumen einsetzbar.

Soll Material in die Vorrichtung nachgefüllt werden, wird die Kompressionsvorrichtung 7 zuerst angehoben, beispielsweise in die in Fig. 1 dargestellte erste Position. Dann kann der Deckel 3 abgenommen und Material eingefüllt werden. Nach dem erneuten Aufsetzen des Deckels 3 wird die Kompressionsvorrichtung 7 wieder abgesenkt, beispielsweise in die in Fig. 2 dargestellte zweite Position und es kann wieder eine Fermentation stattfinden.

So ermöglicht die erfindungsgemäße Vorrichtung eine Reduktion des Volumens anfallender Abfallstoffe. Es hat sich herausgestellt, dass die Vorrichtung in einem Privathaushalt über einen Zeitraum von etwa vier Wochen zur Verarbeitung der gesamten anfallenden biologisch abbaubaren Abfallstoffe verwendet werden kann, ohne entleert werden zu müssen. Dies erlaubt eine drastische Reduktion des Aufwands bei der Entsorgung der Abfallstoffe.

Wenn der Innenbehälter 2 vollständig mit fermentiertem Material gefüllt ist, kann dieser aus der Vorrichtung entfernt werden. Das Material kann dem herkömmlichen Abfallsystem zugeführt oder beispielsweise im eigenen Garten zu Kompost weiterverarbeitet werden.

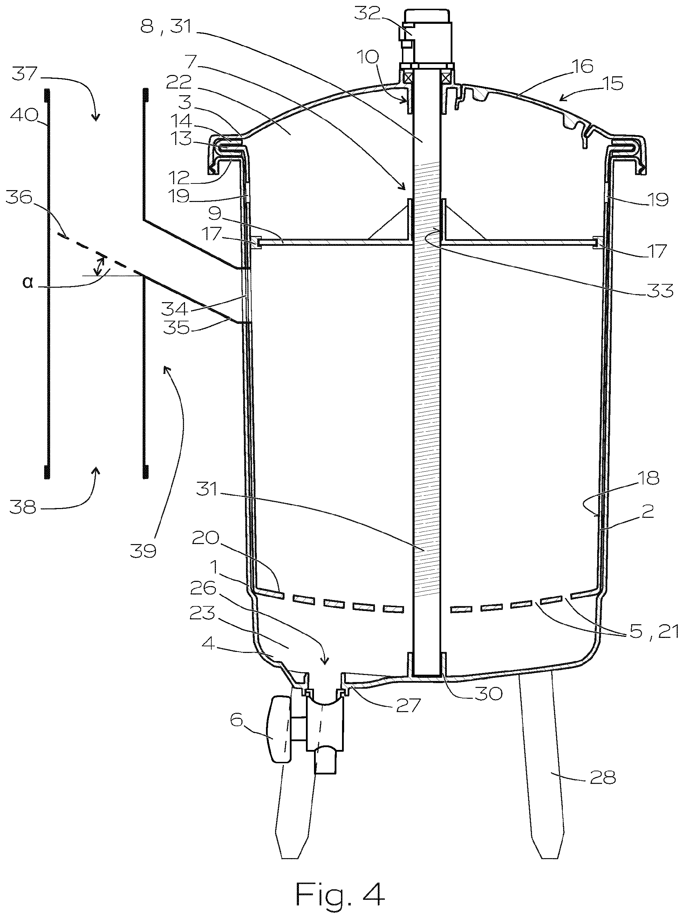

Fig. 4 zeigt eine schematische seitliche Schnittansicht einer erfindungsgemäßen Vorrichtung gemäß einem zweiten Ausführungsbeispiel. In diesem Ausführungsbeispiel umfasst die Kompressionsvorrichtung 7 ebenfalls einen Kolben 8 und einen Kompressionsstempel 9, jedoch ist im Gegensatz zum ersten Ausführungsbeispiel der Kolben 8 als Gewindespindel 31 ausgeführt. Die Gewindespindel 31 ist durch einen Motor 32, der am Deckel 3 angeordnet ist, antreibbar.

Ferner umfasst der Kompressionsstempel 9 einen mit der Gewindespindel 31 korrespondierenden Gewindeabschnitt 33, durch den die Gewindespindel 31 geführt ist. Wird die Gewindespindel 31, die im Bereich des Bodens 27 des Außenbehälters 1 mit einer Lagereinrichtung 30 gelagert ist, in Drehung versetzt, hebt bzw. senkt sich der Kompressionsstempel 9. Dies wird insbesondere dadurch erreicht, dass sich der Kompressionsstempel 9 innerhalb des Innenbehälters 2 nicht frei drehen kann, etwa durch entsprechende Geometrie des Innenbehälters 2 oder durch eine Führungseinrichtung, die eine freie Drehung des Kompressionsstempels 9 sperrt (nicht gezeigt).

Die im Zusammenhang mit dem zweiten Ausführungsbeispiel erläuterte motorbetriebene Kompressionsvorrichtung 7 kann in beliebigen anderen Ausführungsbeispielen eingesetzt werden und ist nicht auf dieses Ausführungsbeispiel beschränkt.

Die Vorrichtung gemäß diesem zweiten Ausführungsbeispiel umfasst ferner eine Eintragsvorrichtung 39, die an ein herkömmliches Abwasserrohr (nicht gezeigt) anschließbar ist. Die Eintragsvorrichtung 39 umfasst ein Durchflussrohr 40 mit einem ersten Anschlussbereich 37 und einen zweiten Anschlussbereich 38 zur Integration in das Abwasserrohr. Im Durchflussrohr 40 ist ein Siebelement 36 angeordnet, das Feststoffe aus dem Abwasser, das durch das Durchflussrohr 40 strömt, aussieben kann. Zurückgehaltene Feststoffe rutschen durch die Neigung des Siebelements 36 von selbst in das Eintragsrohr 35, das über eine Eintragsöffnung 34 in das Innere der Vorrichtung führt.

So können Abfallstoffe, die andernfalls in das Abwassersystem gelangen würden, in die erfindungsgemäße Vorrichtung, insbesondere direkt in den Innenbehälter 2, überführt werden.

Das Siebelement 36 sowie das Eintragsrohr 35 sind in diesem Ausführungsbeispiel in einem Winkel α von etwa 45° zur Horizontalen angeordnet. Das Siebelement weist eine Maschenweite von etwa 10 mm auf.

Um die Position des Kompressionsstempels 9 zu steuern, kann eine Steuervorrichtung (nicht gezeigt) vorgesehen sein, die beispielsweise ein Anheben des Kompressionsstempels 9 bewirkt, wenn Wasser durch das Durchflussrohr 40 strömt.

In diesem Ausführungsbeispiel ist die Eintragsöffnung 34 im oberen Bereich der Vorrichtung angeordnet. Beim Eintrag von Material wird daher vorzugsweise der Kompressionsstempel 9 in eine Position gebracht, die über der Eintragsöffnung 34 liegt. Nach erfolgtem Eintrag kann der Kompressionsstempel 9 wieder abgesenkt werden wodurch der zweite Gasraum 23 wieder im Wesentlichen sauerstofffrei verschlossen ist.

In den Darstellungen der Ausführungsbeispiele nicht gezeigt ist die optional vorgesehene Gasdruckausgleichsöffnung im Kompressionsstempel 9, die ein besonders leichtgängiges Herabdrucken des Kompressionsstempels 9 ermöglicht. In einem Ausführungsbeispiel kann die Gasdruckausgleichsöffnung als Bohrung bzw, Loch ausgestaltet sein. Um den Austritt von Lebewesen, wie beispielsweise Fliegenlarven, verhindern, ist die Ausgleichsöffnung bevorzugt von einer gasdurchlässigen Abdeckung, beispielsweise einen Netz mit einer Maschenweite von etwa 0,3 mm, bedeckt.

Die weiteren Merkmale der Vorrichtung des zweiten Ausführungsbeispiels sind analog zu jenen gemäß dem ersten Ausführungsbeispiel.

**Bezugszeichenliste**

| | | | |
|---|---|---|---|
| 1 | Außenbehälter | 31 | Gewindespindel |
| 2 | Innenbehälter | 32 | Motor |
| 3 | Deckel | 33 | Gewindeabschnitt |
| 4 | Flüssigkeitsauffangraum | 34 | Eintragsöffnung |
| 5 | Ablauföffnung | 35 | Eintragsrohr |
| 6 | Auslassvorrichtung | 36 | Siebelement |
| 7 | Kompressionsvorrichtung | 37 | erster Anschlussbereich |
| 8 | Kolben | 38 | zweiter Anschlussbereich |
| 9 | Kompressionsstempel | 39 | Eintragsvorrichtung |
| 10 | Durchführöffnung | 40 | Durchflussrohr |
| 11 | erstes Dichtmittel | | |
| 12 | Auflagebereich | α | Winkel |
| 13 | Auflagevorsprung | | |
| 14 | Dichtelement | | |
| 15 | Gasdurchströmöffnung | | |
| 16 | Filtereinrichtung | | |
| 17 | zweites Dichtmittel | | |
| 18 | Wand des Innenbehälters | | |
| 19 | Haltegriff | | |
| 20 | Boden des Innenbehälters | | |
| 21 | Ablaufloch | | |
| 22 | erster Gasraum | | |
| 23 | zweiter Gasraum | | |
| 24 | Rastvorsprung | | |
| 25 | Rastfreistellung | | |
| 26 | Auslassöffnung | | |
| 27 | Boden des Außenbehälters | | |
| 28 | Standfuß | | |
| 29 | Handgriff | | |
| 30 | Lagereinrichtung | | |

## Patentansprüche

1. **Vorrichtung** zur Fermentation von biologisch abbaubaren Abfallstoffen, umfassend einen Außenbehälter (1), einen innerhalb des Außenbehälters (1) angeordneten und aus dem Außenbehälter (1) entnehmbaren Innenbehälter (2), sowie einen Deckel (3),
- wobei im Außenbehälter (1) im Bereich unter dem Innenbehälter (2) ein Flüssigkeitsauffangraum (4) vorgesehen ist,
- wobei der Innenbehälter (2) wenigstens eine Ablauföffnung (5) zum Ablauf von Flüssigkeit in den Flüssigkeitsauffangraum (4) aufweist,
- und wobei der Außenbehälter (1) ferner eine Auslassvorrichtung (6) zum Auslassen von im Flüssigkeitsauffangraum (4) befindlicher Flüssigkeit umfasst,
wobei die Vorrichtung eine Kompressionsvorrichtung (7) umfasst, die dazu eingerichtet ist, im Innenbehälter (2) befindliches Material zu komprimieren, **dadurch gekennzeichnet, dass** der Außenbehälter (1) einen Auflagebereich (12) aufweist, und dass der Innenbehälter (2) einen Auflagevorsprung (13) aufweist, wobei der Auflagevorsprung (13) zur vorzugsweise umlaufenden Auflage auf dem Auflagebereich (12) ausgebildet ist.

2. Vorrichtung nach Anspruch 1, **dadurch gekennzeichnet, dass** die Kompressionsvorrichtung (7) einen Kolben (8) und einen im Innenbehälter (2) angeordeten oder anordenbaren Kompressionsstempel (9) umfasst,
- wobei der Kolben (8) durch eine Durchführöffnung (10) des Deckels (3) geführt und verschiebbar gelagert ist,
- oder wobei die Kompressionsvorrichtung (7) vollständig innerhalb der Vorrichtung angeordnet ist.

3. Vorrichtung nach Anspruch 2, **dadurch gekennzeichnet, dass** an der Durchführöffnung (10) ein erstes Dichtmittel (11), insbesondere ein Dichtungsring, zur Dichtung des Kolbens (8) an der Durchführöffnung (10) angeordnet ist.

4. Vorrichtung nach Anspruch 1, **dadurch gekennzeichnet, dass** der Deckel (3) im geschlossenen Zustand der Vorrichtung am Auflagevorsprung (13) anliegt.

5. Vorrichtung nach Anspruch 1 oder 4, **dadurch gekennzeichnet, dass** am Auflagevorsprung (13) ein gegebenenfalls gummielastisches Dichtelement (14) angeordnet ist, wobei das Dichtelement (14) den Auflagevorsprung (13) bevorzugt U-förmig umschließt.

6. Vorrichtung nach einem der Ansprüche 1 bis 5, **dadurch gekennzeichnet,**
- **dass** der Außenbehälter (1) und/oder der Deckel (3) eine Gasdurchströmöffnung (15) aufweist, wobei die Gasdurchströmöffnung (15) mit einer Filtereinrichtung (16) abgedeckt ist, wobei die die Filtereinrichtung (16) gegebenenfalls ein Aktivkohlefilter ist oder einen Aktivkohlefilter umfasst,
- oder dass die Vorrichtung im Wesentlichen gasdicht gegen die Umgebungsatmosphäre abgedichtet ist.

7. Vorrichtung nach einem der Ansprüche 2 bis 6, **dadurch gekennzeichnet, dass** der Kompressionsstempel (9) ein zweites Dichtmittel (17) zur Abdichtung des Kompressionsstempels (9) gegen die Wand (18) des Innenbehälters (2) umfasst.

8. Vorrichtung nach einem der Ansprüche 1 bis 7, **dadurch gekennzeichnet, dass** der Innenbehälter (2) wenigstens einen Haltegriff (19), insbesondere zwei einander gegenüberliegend angeordnete Haltegriffe (19), umfasst, und/oder dass die Ablauföffnung (5) als Anordnung einer Vielzahl von Ablauflöchern (21), insbesondere als Lochgitter, ausgeführt ist.

9. Vorrichtung nach einem der Ansprüche 1 bis 8, **dadurch gekennzeichnet, dass** die Ablauföffnung (5) im Boden (20) des Innenbehälters (2) angeordnet ist.

10. Vorrichtung nach Anspruch 9, **dadurch gekennzeichnet, dass** der Boden (20) des Innenbehälters (2) eine Auswölbung aufweist, wobei die Auswölbung in Richtung des Flüssigkeitsauffangraums (4) weist.

11. Vorrichtung nach einem der Ansprüche 1 bis 10, **dadurch gekennzeichnet, dass** die Vorrichtung in ihrem Inneren einen ersten Gasraum (22) und einen zweiten Gasraum (23) umfasst, wobei der erste Gasraum (22) durch den Innenbehälter (2) und die Kompressionsvorrichtung (7), insbesondere den Kompressionsstempel (9), im Wesentlichen gasdicht vom zweiten Gasraum (23) getrennt ist.

12. Vorrichtung nach einem der Ansprüche 1 bis 11, **dadurch gekennzeichnet, dass** die Vorrichtung ferner eine Eintragsvorrichtung (39) umfasst, wobei die Eintragsvorrichtung (39) ein Durchflussrohr (40) mit einem ersten Anschlussbereich (37) und einem zweiten Anschlussbereich (38) zur Verbindung mit einem Abwasserrohr umfasst, wobei im Durchflussrohr (40) ein Siebelement (36) zur Entfernung von Feststoffen aus der das Durchflussrohr (40) durchströmenden Flüssigkeit vorgesehen ist, wobei die Eintragsvorrichtung (39) im Bereich des Siebelements (36) ein Eintragsrohr (35) umfasst, und wobei das Eintragsrohr durch eine Eintragsöffnung (34) in die Vorrichtung, insbesondere in den Innenbehälter (2), geführt ist.

13. Vorrichtung nach einem der Ansprüche 1 bis 12, **dadurch gekennzeichnet, dass** in der Kompressionsvorrichtung (7), insbesondere im Kompressionsstempel (9), eine Gasdruckausgleichsöffnung vorgesehen ist.

14. Vorrichtung nach Anspruch 13, **dadurch gekennzeichnet, dass** die Vorrichtung in ihrem Inneren einen ersten Gasraum (22) und einen zweiten Gasraum (23) umfasst, wobei der erste Gasraum (22) durch den Innenbehälter (2) und die Kompressionsvorrichtung (7), insbesondere den Kompressionsstempel (9), vom zweiten Gasraum (23) getrennt ist, wobei die Gasdruckausgleichsöffnung einen Gasaustausch zwischen erstem Gasraum (22) und zweitem Gasraum (23) ermöglicht, und/oder dass die Gasdruckausgleichsöffnung von einer gasdurchlässigen Abdeckung, insbesondere von einem Gewebe und/oder von einem Netz, bedeckt ist.

## Claims

1. A device for fermenting biodegradable waste materials, comprising an outer container (1), an inner container (2) arranged within the outer container (1) and removable from the outer container (1), and a lid (3),
- wherein a liquid-collecting chamber (4) is provided in the outer container (1) in the region below the inner container (2),
- wherein the inner container (2) has at least one drain opening (5) for draining liquid into the liquid-collecting chamber (4),
- and wherein the outer container (1) further comprises a discharge device (6) for discharging the liquid in the liquid-collecting chamber (4),
wherein the device comprises a compression device (7), which is designed to compress the material in the inner container (2), **characterised in that** the outer container (1) has a support region (12), and **in that** the inner container (2) has a support projection (13), wherein the support projection (13) is configured to rest, preferably circumferentially, on the support region (12).

2. The device according to claim 1, **characterised in that** the compression device (7) comprises a piston (8) and a compression head (9) arranged or arrangeable in the inner container (2),
- wherein the piston (8) is guided through a passage opening (10) in the lid (3) and is mounted so as to be displaceable,
- or wherein the compression device (7) is arranged entirely within the device.

3. The device according to claim 2, **characterised in that** a first sealing means (11), in particular a sealing ring, is arranged at the passage opening (10) to seal the piston (8) against the passage opening (10).

4. The device according to claim 1, **characterised in that** when the device is closed, the lid (3) rests on the support projection (13).

5. The device according to claim 1 or 4, **characterised in that** a sealing element (14), which optionally is rubber-elastic, is arranged on the support projection (13), wherein the sealing element (14) preferably surrounds the support projection (13) in a U-shape.

6. The device according to any one of claims 1 to 5, **characterised**
- **in that** the outer container (1) and/or the lid (3) have a gas flow opening (15), wherein the gas flow opening (15) is covered by a filter unit (16), wherein the filter unit (16) is optionally an activated carbon filter or comprises an activated carbon filter,
- or in that the device is sealed in a substantially gas-tight manner against the ambient atmosphere.

7. The device according to any one of claims 2 to 6, **characterised in that** the compression head (9) comprises a second sealing means (17) for sealing the compression head (9) against the wall (18) of the inner container (2).

8. The device according to any one of claims 1 to 7, **characterised in that** the inner container (2) comprises at least one handle (19), in particular two handles (19) arranged opposite one another, and/or **in that** the drain opening (5) is designed as an arrangement of a plurality of drain holes (21), in particular as a perforated grid.

9. The device according to any one of claims 1 to 8, **characterised in that** the drain opening (5) is located in the bottom (20) of the inner container (2).

10. The device according to claim 9, **characterised in that** the bottom (20) of the inner container (2) has a convex portion, with the convex portion projecting toward the liquid-collecting chamber (4).

11. The device according to any one of claims 1 to 10, **characterised in that** the device comprises, in its interior, a first gas chamber (22) and a second gas chamber (23), the first gas chamber (22) being separated by the inner container (2) and the compression device (7), in particular by the compression head (9), from the second gas chamber (23) in a substantially gas-tight manner.

12. The device according to any one of claims 1 to 11, **characterised in that** the device further comprises a feed device (39), wherein the feed device (39) comprises a flow pipe (40) with a first connection region (37) and a second connection region (38) for connection to a wastewater pipe, wherein a drain strainer element (36) is provided for removing solids from the liquid flowing through the flow pipe (40), wherein the feed device (39) comprises a feed pipe (35) in the region of the drain strainer element (36), and wherein the feed pipe leads through a feed opening (34) into the device, in particular into the inner container (2),

13. The device according to any one of claims 1 to 12, **characterised in that** a gas pressure equalization opening is provided in the compression device (7), in particular in the compression head (9).

14. The device according to claim 13, **characterised in that** the device comprises, in its interior, a first gas chamber (22) and a second gas chamber (23), the first gas chamber (22) being separated by the inner container (2) and the compression device (7), in particular by the compression head (9), from the second gas chamber (23), the gas pressure equalization opening allowing gas exchange between the first gas chamber (22) and the second gas chamber (23), and/or **in that** the gas pressure equalization opening is covered by a gas-permeable cover, in particular a fabric and/or a mesh.

## Revendications

1. **Dispositif** destiné à la fermentation de déchets biodégradables, comprenant un récipient extérieur (1), un récipient intérieur (2) disposé à l'intérieur du récipient extérieur (1) et retirable de celui-ci, ainsi qu'un couvercle (3),
- dans lequel le récipient extérieur (1) comporte, dans la zone située sous le récipient intérieur (2), un compartiment de collecte de liquide (4),
- dans lequel le récipient intérieur (2) comporte au moins un orifice d'évacuation (5) permettant l'écoulement du liquide vers le compartiment de collecte de liquide (4),
- et dans lequel le récipient extérieur (1) comprend en outre un dispositif de vidange (6) destiné à évacuer le liquide se trouvant dans le compartiment de collecte de liquide (4),
dans lequel le dispositif comprend un dispositif de compression (7) conçu pour comprimer le matériau se trouvant dans le récipient intérieur (2), **caractérisé en ce que** le récipient extérieur (1) présente une zone d'appui (12) et **en ce que** le récipient intérieur (2) présente une saillie d'appui (13), la saillie d'appui (13) étant conçue pour s'appuyer de préférence sur tout son pourtour sur la zone d'appui (12).

2. Dispositif selon la revendication 1, **caractérisé en ce que** le dispositif de compression (7) comprend un piston (8) et un poinçon de compression (9) disposé ou pouvant être disposé dans le récipient intérieur (2),
- dans lequel le piston (8) passe à travers un orifice de passage (10) du couvercle (3) et est monté de manière à pouvoir coulisser,
- ou dans lequel le dispositif de compression (7) est entièrement disposé à l'intérieur du dispositif.

3. Dispositif selon la revendication 2, **caractérisé en ce qu'**un premier moyen d'étanchéité (11), en particulier une bague d'étanchéité, est disposé au niveau de l'orifice de passage (10) afin d'assurer l'étanchéité du piston (8) au niveau de l'orifice de passage (10).

4. Dispositif selon la revendication 1, **caractérisé en ce que**, lorsque le dispositif est en état fermé, le couvercle (3) est en appui sur la saillie d'appui (13).

5. Dispositif selon la revendication 1 ou 4, **caractérisé en ce qu'**un élément d'étanchéité (14), optionnellement élastique en caoutchouc, est disposé sur la saillie d'appui (13), dans lequel l'élément d'étanchéité (14) entoure la saillie d'appui (13) de préférence en forme de U.

6. Dispositif selon l'une des revendications 1 à 5, **caractérisé en ce**
- **que** le récipient extérieur (1) et/ou le couvercle (3) comportent un orifice de passage de gaz (15), dans lequel l'orifice de passage de gaz (15) est recouvert d'un dispositif de filtration (16), dans lequel le dispositif de filtration (16) est optionnellement un filtre à charbon actif ou comprend un filtre à charbon actif,
- ou que le dispositif est sensiblement étanche aux gaz par rapport à l'atmosphère ambiante.

7. Dispositif selon l'une des revendications 2 à 6, **caractérisé en ce que** le poinçon de compression (9) comprend un deuxième moyen d'étanchéité (17) destiné à assurer l'étanchéité du poinçon de compression (9) par rapport à la paroi (18) du récipient intérieur (2).

8. Dispositif selon l'une des revendications 1 à 7, **caractérisé en ce que** le récipient intérieur (2) comprend au moins une poignée (19), en particulier deux poignées (19) disposées de manière opposée, et/ou **en ce que** l'orifice d'évacuation (5) est réalisé sous la forme d'un ensemble de nombreux trous d'écoulement (21), en particulier sous la forme d'une grille perforée.

9. Dispositif selon l'une des revendications 1 à 8, **caractérisé en ce que** l'orifice d'évacuation (5) est disposé dans le fond (20) du récipient intérieur (2).

10. Dispositif selon la revendication 9, **caractérisé en ce que** le fond (20) du récipient intérieur (2) présente un renflement, dans lequel le renflement est orienté vers le compartiment de collecte de liquide (4).

11. Dispositif selon l'une des revendications 1 à 10, **caractérisé en ce que** le dispositif comprend, à l'intérieur, un premier compartiment à gaz (22) et un deuxième compartiment à gaz (23), le premier compartiment à gaz (22) étant séparé de manière sensiblement étanche aux gaz du deuxième compartiment à gaz (23) par le récipient intérieur (2) et le dispositif de compression (7), en particulier le poinçon de compression (9).

12. Dispositif selon l'une des revendications 1 à 11, **caractérisé en ce que** le dispositif comprend en outre un dispositif d'alimentation (39), le dispositif d'alimentation (39) comprenant un tuyau d'écoulement (40) avec une première zone de raccordement (37) et une deuxième zone de raccordement (38) destinées à être raccordées à une canalisation d'eaux usées, dans lequel un élément filtrant (36) est prévu dans le tuyau d'écoulement (40) pour éliminer les matières solides du liquide s'écoulant à travers le tuyau d'écoulement (40), dans lequel le dispositif d'alimentation (39) comprend, au niveau de l'élément filtrant (36), un tuyau d'alimentation (35), et dans lequel le tuyau d'alimentation est guidé à travers un orifice d'alimentation (34) dans le dispositif, en particulier dans le récipient intérieur (2).

13. Dispositif selon l'une des revendications 1 à 12, **caractérisé en ce qu'**un orifice d'équilibrage de la pression de gaz est prévu dans le dispositif de compression (7), en particulier dans le poinçon de compression (9).

14. Dispositif selon la revendication 13, **caractérisé en ce que** le dispositif comprend, à l'intérieur, un premier compartiment à gaz (22) et un deuxième compartiment à gaz (23), dans lequel le premier compartiment à gaz (22) est séparé du deuxième compartiment à gaz (23) par le récipient intérieur (2) et le dispositif de compression (7), en particulier le poinçon de compression (9), dans lequel l'orifice d'équilibrage de pression de gaz permet un échange de gaz entre le premier compartiment à gaz (22) et le deuxième compartiment à gaz (23), et/ou **en ce que** l'orifice d'équilibrage de pression de gaz est recouvert d'un revêtement perméable au gaz, en particulier d'un tissu et/ou d'un filet.
